# EUROPÄISCHE PATENTANMELDUNG

(11) **EP 2 063 195 A1**
(43) Veröffentlichungstag der Anmeldung: **27.05.2009**
(21) Anmeldenummer: 08016166.4
(22) Anmeldetag: 13.09.2008
(51) Int. Cl.: F24F 13/02, F16L 23/14

(54) **Vorrichtung zur Verbindung von Luftkanalelementen mit Butyl-Dichtungsmasse zum Kleben und Abdichten von Flansch und Luftkanal**

(30) Priorität: 23.11.2007 DE 202007016521 U
(71) Anmelder: Gebhardt-Stahl GmbH, 59457 Werl (DE)
(72) Erfinder: Gebhardt, Manfred, 59494 Soest (DE)
(74) Vertreter: Meinke, Dabringhaus und Partner GbR

(57) **Zusammenfassung**

Mit einer Vorrichtung zur Verbindung von Luftkanalelementen, die an ihren Stoßrändern mit Flanschprofilen (1), die Aufnahmen für Eckwinkel bilden, versehen sind, soll eine Lösung geschaffen werden, mit der bei Erzielung einer sehr hohen Dichtwirkung besondere Verbindungsschritte zwischen Luftkanalelement einerseits und Flanschprofil andererseits entbehrlich gemacht werden.

Dies wird dadurch erreicht, dass bei der Profilierung der Flanschprofile (1) in den Boden der Einstecktasche eine Wulst (8) oder Raupe aus einem Butyl-Kleb-/Dicht-/ und -Dämmstoff eingebracht ist.

## Beschreibung

Die Erfindung richtet sich auf eine Vorrichtung zur Verbindung von Luftkanalelementen, die an ihren Stoßrändern mit Flanschprofilen, die Aufnahmen für Eckwinkel bilden, versehen sind, wobei die Flanschprofile zum Über- und Untergreifen der stirnseitigen Randbereiche der Luftkanalelemente als querschnittlich im Wesentlichen L-förmig aus Blech gefalzte Hohlprofile ausgebildet sind, der im Oberbegriff des Anspruches 1 angegebenen Gattung.

Derartige Vorrichtungen mit entsprechend profilierten Flanschprofilen gibt es in einer Reihe von Ausgestaltungen, wobei hier insbesondere als gattungsbildend die EP-85 355-B angesehen wird.

Die Flanschprofile nach diesem Stand der Technik weisen bereits erhebliche Vorteile gegenüber einfachen Flanschprofilen auf. Sie sind auch in Varianten bekannt, um die Verwindungssteifigkeit zu verbessern, z.B. durch Laserschweißen (DE-200 12 782-U).

Ein besonderes Problem derartiger Flanschprofile besteht darin, dass nicht immer gewährleistet ist, dass der aufgesteckte und am Kanalfluss befestigte Profilrahmen ausreichend dicht ist. Hier sind einige Lösungen bekannt, u.a. beispielsweise die wenigstens teilweise Verschweißung der Rückkröpfung in der anliegenden Profilwand, was mit einem entsprechenden technischen Aufwand verbunden ist.

Bei Einfachprofilen ist es auch bekannt, in die Übergangsecke des in der Gebrauchslage im Inneren des Kanalschusses liegenden Profilschenkels zum die Trennfugenebene bildenden Profilschenkel eine Dichtmasse einzuspritzen, wie dies beispielsweise aus den DE-93 20 128-U, DE-39 01 523-U oder DE-72 04 743-U bekannt ist.

Aufgabe der vorliegenden Erfindung ist es, eine Lösung zu schaffen, mit der bei Erzielung einer sehr hohen Dichtwirkung besondere Verbindungsschritte zwischen Luftkanalelement einerseits und Flanschprofil andererseits entbehrlich gemacht werden.

Bei einer Vorrichtung der eingangs bezeichneten Art wird diese Aufgabe gemäß der Erfindung dadurch gelöst, dass bei der Profilierung der Flanschprofile in den Boden der Einstecktasche eine Wulst oder Raupe aus einem Butyl-Kleb-/ -Dicht-/ und -Dämmstoff eingebracht ist.

Es hat sich gezeigt, dass eine derartige Butyl-Dichtmasse, die wulst- oder raupenförmig im Bodenbereich der Einstecktasche eingebracht ist, nicht nur für eine optimale Dichtung sorgt, sondern gleichzeitig auch, aufgrund ihrer hohen klebenden Wirkung, das Flanschprofil so fest am Luftkanalelement zu befestigen in der Lage ist, dass zusätzliche Befestigungsschritte in der Regel entbehrlich sind, d.h. weder bedarf es danach eines Verschweißens, noch eines Verdrückens, einer Verschraubung o. dgl.

Ausgestaltungen der Erfindung ergeben sich aus den Unteransprüchen. Hierbei kann insbesondere vorgesehen sein, dass die Butyl-Wulst in der Montagelage des aufgesteckten Flanschprofiles in einem möglichen Spalt zwischen Rückkröpfungsvorderkante und Innenwand des zugeordneten Profilbereiches vorgesehen ist. Diese Gestaltung sorgt nicht nur für die entsprechende Dichtheit, sondern auch dafür, dass über die Butyl-Wulst eine Klebeverbindung zwischen Rückkröpfung und Gegenprofilwand zur Erzielung hoher Festigkeiten des Flanschprofiles erreicht wird.

Die Butyl-Wulst weist erfindungsgemäße hohe Klebeigenschaften, hohe Dichteigenschaften und hohe schwingungsdämpfende Eigenschaften auf. Letztes führt insbesondere zur Geräuschunterdrückung bei Betrieb derartiger Luftkanäle.

Die Erfindung ist nachstehend anhand der Zeichnung beispielsweise näher erläutert. Diese zeigt in
- Fig. 1: einen Abschnitt eines Flanschprofiles nach der Erfindung mit angedeuteter Dichtwulst,
- Fig. 2: eine vergrößerte Darstellung des Dichtwulstbereiches nach Fertigstellung des Flanschprofiles,
- Fig. 3: einen Schritt der Herstellung der Dichtwulst während der Profilierung des Flanschprofiles sowie in
- Fig. 4: den Dichtwulstbereich in der Gebrauchslage mit aufgestecktem Flanschprofil auf eine Kanalstirnwand.

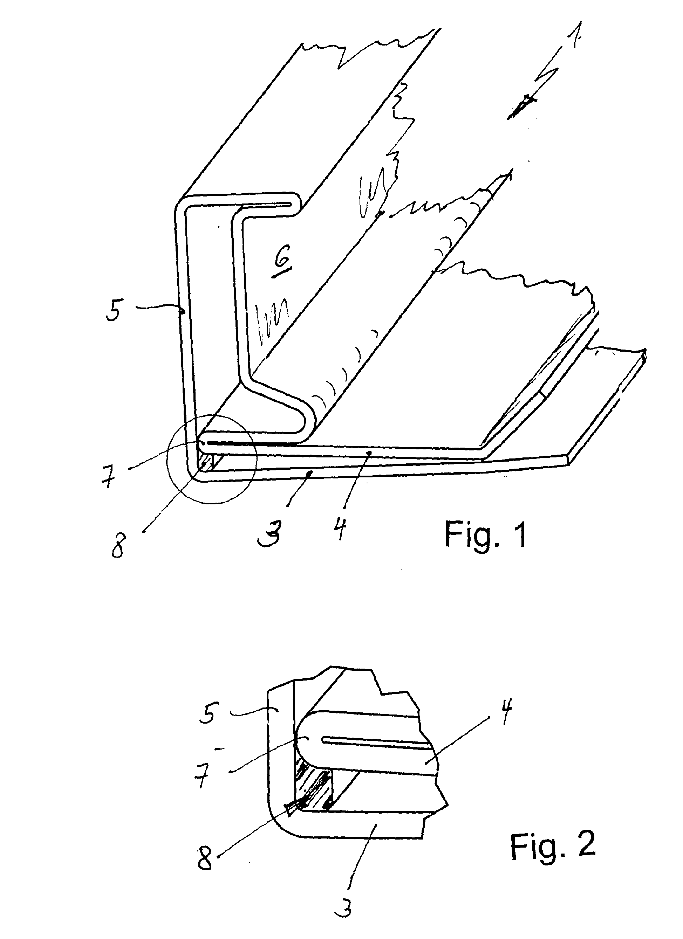

Das erfindungsgemäße, allgemein mit 1 bezeichnete Flanschprofil ist, wie sich beispielsweise aus Fig. 1 ergibt, im Wesentlichen querschnittlich L-förmig, wobei die beiden L-Schenkel doppelwandig ausgebildet sind. Insgesamt ist das Flanschprofil aus einem einzigen Blechband durch Kaltverformung hergestellt.

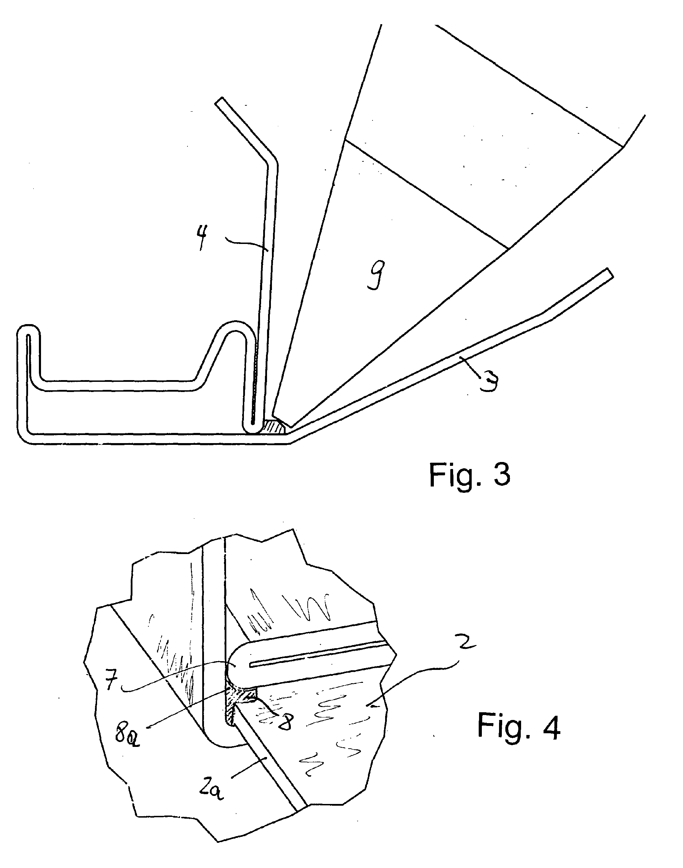

Die einzelnen Hauptwandflächen der L-Schenkel werden zur vereinfachten Beschreibung wie folgt bezeichnet: Der in der Gebrauchslage eine Kanalseitenwand, in Fig. 4 mit 2 bezeichnet, untergreifende Profilbereich trägt das Bezugszeichen 3, der im Wesentlichen parallel darüber liegende, in der Gebrauchslage oben auf der Kanalseitenwand 2 aufliegende Profilbereich ist mit 4 bezeichnet, der der Trennfugenebene zugewandte Profilbereich trägt das Bezugszeichen 5, der auf Abstand gegenüberliegende Profilbereich trägt das Bezugszeichen 6.

Erkennbar geht der Profilbereich 4 mittels einer allgemein mit 7 bezeichneten Rückkröpfung, die, wie sich aus Fig. 2 ergibt, ggf. die Innenfläche des Profilbereiches 5 berühren kann, über eine weitere Profilierung in den Profilbereich 6 über, wobei hier die weiteren Profilierungen für die Erfindung keine besondere Rolle spielen.

Aufgrund der Rückkröpfung 7 bilden die Profilbereiche 3 und 4 eine Einstecktasche für die Stirnseite der Kanalseitenwand 2, wobei in deren Taschenboden eine Raupe oder Wulst 8 aus einem hohe Klebe-, Dicht- und Klemmwirkung aufweisenden Butyl-Material, wie sich dies insbesondere aus Fig. 2 ergibt, vorgesehen ist. Diese Wulst aus Butyl-Material wird über einen Injektionskopf 9 (Fig. 3) kurz vor dem Übereinanderfalzen des Profilbereiches 3 über den Profilbereich 4 eingespritzt, wie dies in Fig. 3 angedeutet ist.

Wird nun das Profil 1 über die Kanalwand 2 geschoben, drückt sich die in Fig. 4 mit 2a bezeichnete Stirnwand der Kanalwand 2 in die Butyl-Masse 8, wie dies in Fig. 4 angedeutet ist, wobei gleichzeitig die Butyl-Masse 8 in den Spaltbereich relativ zur Rückfalzung 7 eindringen kann, auch dies ist in Fig. 4 angedeutet, der entsprechende Bereich ist mit 8a bezeichnet.

Natürlich ist das beschriebene Ausführungsbeispiel der Erfindung in vielfacher Ausgestaltung abzuändern, ohne den Grundgedanken zu verlassen.

## Patentansprüche

1. Vorrichtung zur Verbindung von Luftkanalelementen, die an ihren Stoßrändern mit Flanschprofilen (1), die Aufnahmen für Eckwinkel bilden, versehen sind, wobei die Flanschprofile (1) zum Über- und Untergreifen der stirnseitigen Randbereiche der Luftkanalelemente (2) einerseits und zur Bildung von Aufnahmebereichen für die Eckwinkel andererseits als querschnittlich im Wesentlichen L-förmig aus Blech gefalzte Hohlprofile ausgebildet sind mit einer Rückkröpfung (7) der der Trennfugenebene abgewandten, je eine Wand jedes L bildenden Profilblechbereiches (4,6) im Übergang von einem L-Schenkel zum anderen L-Schenkel, wobei die Rückkröpfung (7) ggf. die Innenfläche der die Trennfugenebene bildenden Profilwand (5) zur Ausbildung einer Einstecktasche für die Randkante (2a) des Luftkanalelementes berührt,
**dadurch gekennzeichnet,**
**dass** bei der Profilierung der Flanschprofile (1) in den Boden der Einstecktasche eine Wulst (8) oder Raupe aus einem Butyl-Kleb-/-Dicht-/ und -Dämmstoff eingebracht ist.

2. Vorrichtung nach Anspruch 1,
**dadurch gekennzeichnet,**
**dass** die Butyl-Wulst (8) in der Montagelage des aufgesteckten Flanschprofiles in einem möglichen Spalt zwischen Rückkröpfungsvorderkante (7) und Innenwand des zugeordneten Profilbereiches (5) vorgesehen ist.

3. Vorrichtung nach Anspruch 1 oder 2,
**dadurch gekennzeichnet,**
**dass** die Butyl-Wulst (8) hohe Klebeigenschaften aufweist.

4. Vorrichtung nach einem der vorangehenden Ansprüche,
**dadurch gekennzeichnet,**
**dass** die Butyl-Wulst (8) hohe Dichteigenschaften aufweist.

5. Vorrichtung nach einem der vorangehenden Ansprüche,
**dadurch gekennzeichnet,**
**dass** die Butyl-Wulst (8) schwingungsdämpfende Eigenschaften aufweist.
